# EUROPÄISCHE PATENTSCHRIFT

(11) **EP 2 108 200 B1**
(45) Veröffentlichungstag und Bekanntmachung des Hinweises auf die Patenterteilung: **23.04.2014**
(21) Anmeldenummer: 07858111.3
(22) Anmeldetag: 21.12.2007
(51) Int. Cl.: H01M 2/26

(54) **ELEKTRODENPACK EINER ELEKTROCHEMISCHEN ZELLE SOWIE ELEKTROCHEMISCHE ZELLE MIT EINEM ELEKTRODENPACK**
ELECTRODE PACK OF AN ELECTROCHEMICAL CELL AND ELECTROCHEMICAL CELL COMPRISING AN ELECTRODE PACK
ENSEMBLE D'ÉLECTRODES D'UNE CELLULE ÉLECTROCHIMIQUE ET CELLULE ÉLECTROCHIMIQUE COMPORTANT UN ENSEMBLE D'ÉLECTRODES

(30) Priorität: 10.01.2007 DE 102007001574
(43) Veröffentlichungstag der Anmeldung: 14.10.2009
(73) Patentinhaber: Robert Bosch GmbH, 70442 Stuttgart (DE)
(72) Erfinder: AUMAYER, Richard, 14059 Berlin (DE)
(86) Internationale Anmeldenummer: PCT/EP2007/064500
(87) Internationale Veröffentlichungsnummer: WO 2008/083920

(56) Entgegenhaltungen:
- EP-A- 1 577 973
- WO-A-00/72390
- GB-A- 1 110 169
- JP-A- 2000 323 117
- US-A1- 2004 127 952

## Beschreibung

### Stand der Technik

Die Erfindung geht aus von einem Elektrodenpack einer elektrochemischen Zelle sowie einer elektrochemischen Zelle mit einem Elektrodenpack nach den Oberbegriffen der unabhängigen Ansprüche.

Bei anspruchsvollen Traktionssystemen wie Hybridkraftfahrzeugen werden leistungsfähig elektrische Speicher benötigt. Bekannt sind hier Lithium-lonen-Zellen in verschiedenen Ausführungen. Diese sind häufig rund oder prismatisch mit gestapelten, gewickelten oder gefalteten Elektrodenpacks. Als kostengünstiges und leistungsfähiges System sind Lithium-lonen-Batterien bekannt, wie sie in der EP 1 577 973 A1 beschrieben sind. Dort sind so genannte "Coffeebag"-Zellen als rechteckige flache Zellen ausgebildet. Bei derartigen Zellen sind die Elektrodenpack in einer kaschierten Metallfolie angeordnet, die sich dem Elektrodenpack anpasst. Die Zellen sind dementsprechend weich. Diese werden üblicherweise in mehreren Modulen zusammengefasst und elektrisch parallel und/oder in Serie geschaltet. Für die Funktion der Zelle ist es notwendig, dass die Elektroden während ihrer ganzen Betriebsdauer einen vorgegebenen Abstand beibehalten. Durch Lade-/Entlade-Zyklenbelastung und Temperaturzyklen kann es zu einer Änderung des Abstandes kommen, was die Leistungscharakteristik der Zelle verschlechtert. Weiterhin ist für die Verwendung solcher Zellen in Serienprodukten, etwa Hybridfahrzeugen, eine großserientaugliche Fertigung der Zellen Voraussetzung.

### Offenbarung der Erfindung

Die Erfindung geht aus von einem Elektrodenpack einer elektrochemischen Zelle, welche im Wesentlichen flach ausgebildet ist und seitlich abstehende Anschlussfahnen zur elektrischen Kontaktierung aufweist.

Es wird vorgeschlagen, dass eine erste mit einer elektrochemisch aktiven Masse beschichtete Trägerfolie und eine zweite mit einer elektrochemisch aktiven Masse beschichtete Trägerfolie durch eine erste Separatorfolie getrennt sind, wobei die erste Trägerfolie auf einer Längsseite entlang einer Längserstreckung der Separatorfolie und die zweite Trägerfolie auf der gegenüberliegenden Längsseite der Separatorfolie übersteht dass der Elektrodenpack (10) mit einer Stabilisierung in Form mindestens einer Bandage und / oder mindestens einer Kunststoffklammer versehen ist, welche den Abstand der Trägerfolien (16, 20) im gefalteten Zustand stabilisiert. Die Trägerfolien stehen quer zur Längserstreckung der Separatorfolie über. Die Trägerfolien sind vorzugsweise aus Metall, etwa Aluminium- oder Kupferblech oder dergleichen, gebildet. Sie können mit der aktiven Masse einseitig oder auch beidseitig beschichtet sein. Vorzugsweise in einem Bereich, der von der Separatorfolie abgedeckt ist, sind die Trägerfolien, welche die Anode und die Kathode der elektrochemischen Zelle bilden, mit der aktiven Masse beschichtet. Bevorzugt ist die elektrochemische Zelle als LithiumIonen-Zelle ausgebildet. Die aktive Masse weist dann typischerweise ein Lithiumsalz auf. Die bevorzugte Anordnung der Trägerfolien zueinander erlaubt eine Faltung der Elektrodenpacks in einem kontinuierlichen Fertigungsverfahren. Die Separatorfolien können z.B. aus einem Kunststoff gebildet sein. Geeignete Materialien sind z.B. Polypropylen, Polyethylen oder dergleichen.

Bevorzugt kann die erste Trägerfolie auf einer zweiten Separatorfolie angeordnet sein. Damit kann eine Faltung des Verbunds von Separator- und Trägerfolien durchgeführt werden, wobei Kurzschlüsse zuverlässig vermieden werden können.

Vorteilhaft kann die Separatorfolie auch taschenartig ausgebildet sein, wobei wenigstens eine der Trägerfolien in die taschenartig ausgebildete Separatorfolie eintaucht. Es können auch beide Trägerfolien in einer taschenartigen Separatorfolie angeordnet sein. Bei der Faltung können Kurzschlüsse ebenso zuverlässig vermieden werden.

Vorzugsweise kann der Verbund aus Separator- und Trägerfolien entlang der Längserstreckung in zickzackartiger Weise gefaltet sein. Das bevorzugte Herstellverfahren erlaubt damit eine drehend ablaufende Verfahrensweise anstatt einer getakteten, was vorteilhaft für eine Serienfertigung ist. Dies gilt vor allem dann, wenn sehr große Elektrodenoberflächen sehr dünner Elektroden, d.h. Trägerfolien, verarbeitet werden. Bei der Herstellung von Elektrodenpacks gilt dies für die Prozesse Wickeln oder Falten gegenüber gestapelten Elektrodenpacks. Die kontinuierliche Fertigung der Elektrodenpacks erlaubt es, diese in so genannten laminierten Zellen einzusetzen und eine Stabilität des Elektrodenpacks zu gewährleisten. Neben fertigungstechnischen Vorteilen ergeben sich durch die verbesserte Stabilität der Elektroden auch Funktionsvorteile der Zellen. Bei der Faltung kann das Elektrodenpack möglichst dünn bleiben, was vorteilhaft für die Wärmeableitung aus dem Inneren der Zelle und damit auch für deren Langzeitstabilität ist.

Die Erfindung geht weiterhin von einer elektrochemischen Zelle mit einem Elektrodenpack aus, wobei die Zelle im Wesentlichen flach ausgebildet ist und seitlich abstehende Anschlussfahnen zur elektrischen Kontaktierung aufweist.

Es wird vorgeschlagen, dass eine erste mit einer elektrochemisch aktiven Masse beschichtete Trägerfolie und eine zweite mit einer elektrochemisch aktiven Masse beschichtete Trägerfolie durch eine erste Separatorfolie getrennt sind, wobei die erste Trägerfolie auf einer Längsseite entlang einer Längserstreckung der Separatorfolie und die zweite Trägerfolie auf der gegenüberliegenden Längsseite der Separatorfolie übersteht und jeweils ein Stromableiter an den überstehenden Trägerfolien angebracht ist. Die Trägerfolie ist elektrisch leitfähig ausgebildet, z.B. aus Metall, während die Separatorfolie vorzugsweise eine Kunststofffolie ist. Die Zelle ist bevorzugt eine Lithium-lonen-Zelle.

Bevorzugt kann der Verbund aus Separator- und Trägerfolien entlang der Längserstreckung in zickzackartiger Weise zu dem Elektrodenpack gefaltet sein. Die Faltung kann vorzugsweise so erfolgen, dass außenseitig am gefalteten Elektrodenpack immer eine Separatorfolie angeordnet ist.

Vorteilhaft können die überstehenden Teile der Trägerfolien außerhalb der Stromableiter mit einem Isolator abgedeckt sein. Dann kann auch eine Metallfolie als Außenhaut für die Zelle verwendet werden, die nicht mit einer Isolierbeschichtung kaschiert ist.

Die Stromableiter können quer von der Längserstreckung der Trägerfolien nach außen abstehen. Die Stromableiter können mit Löten oder Schweißen mit den über die Separatorfolien überstehenden Teilen der Trägerfolien verbunden werden. Sinnvollerweise wird die Dimensionierung der Stromableiter auf eine zu erwartende Leistungsabnahme abgestimmt. Dadurch kann eine Dichtigkeit der Zelle verbessert werden. Die nicht an den Stromableitern angebrachten überstehenden Bereiche der Trägerfolien können günstig mit einer Isolierung abgedeckt werden. Dann kann auch eine unkaschierte Metallfolie als Außenhaut der Zelle verwendet werden.

Ist der Elektrodenpack in seiner Länge größer ausgebildet ist als in seiner Höhe, kann der Elektrodenpack dünn genug ausgeführt werden, um eine zuverlässige Wärmeabfuhr aus dem Inneren der Zelle, etwa beim Laden oder Entladen der Zellen, zu gewährleisten.

Ist der Elektrodenpack mit einer Stabilisierung versehen, welche den Abstand der Trägerfolien im gefalteten Zustand stabilisiert, kann über die Lebensdauer der Zelle ein konstanter Elektrodenabstand und eine hohe Funktionsstabilität der Zelle auch bei starker Belastung eingehalten werden. Die Stabilisierung kann mittels Bandagieren oder mittels Anbringen von Kunststoffklammern oder dergleichen erfolgen. Dadurch kann der ursprüngliche Abstand der Trägerfolien voneinander, d.h. der Elektrodenabstand im Elektrodenpack, beibehalten werden und ein Austrocknen der aktiven Masse auf der Trägerfolie verhindert werden. Andernfalls könnten sich Hohlräume bilden, für deren Füllung der vorhandene Elektrolyt nicht ausreicht und eine Austrocknung der aktiven Masse auf der Trägerfolien bewirken.

Bevorzugt ist der Elektrodenpack mit einer Außenhaut versiegelt. Diese ist möglichst umlaufend um das Elektrodenpack dicht angebracht, z.B. verschweißt.

Die erfindungsgemäße elektrochemische Zelle ist besonders für den Einsatz in Hybridfahrzeugen geeignet, für Batterien im industriellen Bereich oder auch für weitere Anwendungen, z.B. bei elektrisch betriebenen Rollstühlen, mit elektrischem Hilfsantrieb versehenen Fahrrädern (Mofas), Hubstaplern oder fahrerlosen Transportsystemen.

### Kurze Beschreibung der Zeichnungen

### Zeichnung

Weitere Vorteile ergeben sich aus der folgenden Zeichnungsbeschreibung. In der Zeichnung sind Ausführungsbeispiele der Erfindung dargestellt. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen:
- Fig. 1 a-c: schematisch eine Draufsicht auf einen explosionsartigen Verbund von Trägerfolien und Separatorfolien eines bevorzugten Elektrodenpacks (Fig. 1a) und eine Draufsicht auf eine Stirnseite einer alternativen Ausgestaltung mit taschenartiger Separatorfolie und einseitig beschichteten Trägerfolien (Fig. 1 b) und eine Alternative mit beidseitig beschichteten Trägerfolien (Fig. 1c);
- Fig. 2a, 2b: eine Seitenansicht eines bevorzugten gefalteten Elektrodenpacks (Fig. 2a) und das Elektrodenpack in Draufsicht (Fig. 2b);
- Fig. 3a, 3b: eine Anschlussfahne an einem bevorzugten Elektrodenpack als Seitenansicht (Fig. 3a) und eine Schrägansicht eines gefalteten Elektrodenpacks mit Anschlussfahne und Isolierungen für überstehenden Trägerfolienbereiche (Fig. 3b); und
- Fig. 4a, 4b: eine Seitenansicht einer bevorzugten elektrochemischen Zelle (Fig. 4a) und als Vergleich eine bekannte Zelle (Fig. 4b).

### Ausführungsformen der Erfindung

In den Figuren sind gleiche oder gleichartige Komponenten mit gleichen Bezugszeichen beziffert.

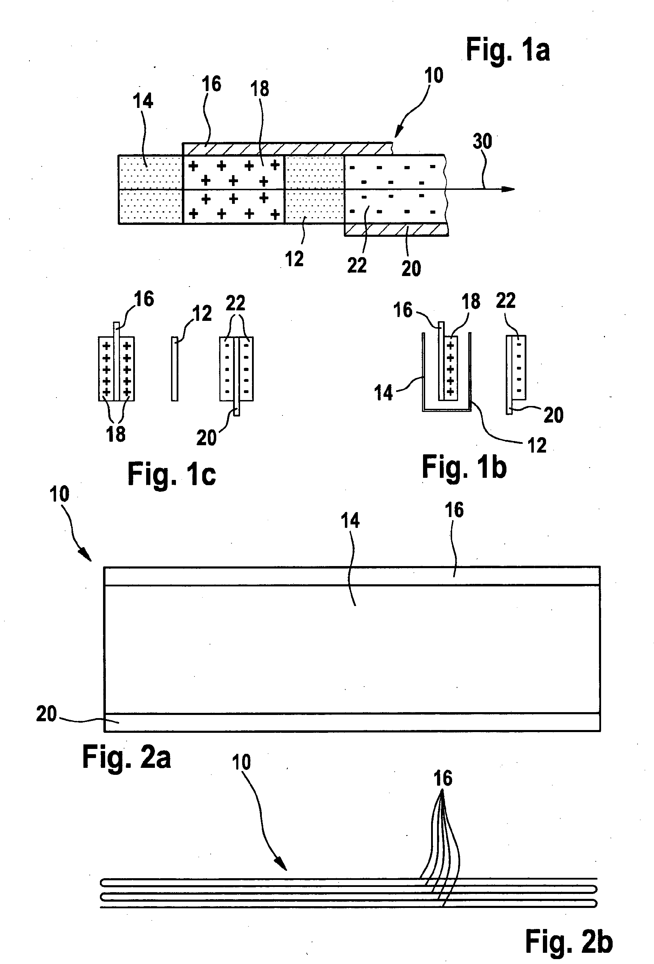

In der Fig. 1a ist eine Draufsicht auf einen explosionsartig dargestellten Verbund von Trägerfolien 16, 20 und Separatorfolien 12, 14 eines bevorzugten Elektrodenpacks 10 einer nicht dargestellten elektrochemischen Zelle skizziert. Fig. 1 b zeigt eine Draufsicht auf eine Stirnseite einer alternativen Ausgestaltung mit taschenartiger Separatorfolie 14, wobei die Trägerfolien 16 und 20 einseitig mit einer elektrochemisch aktiven Masse 18, 22 beschichtet sind. Fig. 1c zeigt eine Ausgestaltung, bei der die Trägerfolien 16, 20 jeweils beidseitig mit ihrer elektrochemisch aktiven Masse 18, 22 beschichtet sind (Abstände nicht maßstabsgetreu).

Die erste Trägerfolie 16. ist mit der elektrochemisch aktiven Masse 18 und die zweite Trägerfolie 20 mit der elektrochemisch aktiven Masse 22 beschichtet. Zwischen den beiden Trägerfolien 16, 20 ist eine Separatorfolie 12 angeordnet. Die erste Trägerfolie 16 liegt auf einer Separatorfolie 14. Die Trägerfolien 16, 20 sind etwas höher ausgebildet als die Separatorfolien 12, 14, wobei die erste Trägerfolie 16 nach oben und die zweite Trägerfolie 20 nach unten übersteht. Die Separatorfolien 12, 14 decken den beschichteten Bereich mit den aktiven Massen 18, 22 ab. Die Separatorfolien 12, 14 sind als separate Lagen vorgesehen. Die eine Trägerfolie 16 bildet z.B. die positive Elektrode, die andere Trägerfolie 20 die negative Elektrode des Elektrodenpacks 10.

Der Elektrodenpack 10 ist in lang gestrecktem Zustand als langes Band mit einer Längserstreckung 30 dargestellt. Eine beispielhafte Elektrodenanordnung für eine 8 Ah-Zelle, wie sie etwa für Hybridfahrzeuge eingesetzt werden kann, ist z.B. ca. 6 m lang und ca. 15 cm hoch.

Fig. 1 b zeigt eine alternative Ausgestaltung, bei der die Separatorfolien 12, 14 miteinander verbunden und zu einer taschenartigen Lage zusammengefasst sind; die Separatorfolien 12, 14 bilden Schenkel der taschenartigen Lage. In die taschenartig ausgebildete Lage ist die eine Trägerfolie 16 eingesteckt und ragt nach oben über die Höhe der Separatorfolien 12, 14 hinaus.

Eine Seitenansicht eines bevorzugten gefalteten Elektrodenpacks 10 ist in Fig. 2a und eine Draufsicht auf das Elektrodenpack 10 in Fig. 2b skizziert. Das gefaltete Elektrodenpack 10 ist länger als hoch ausgebildet. An den Längsseiten sind nach oben bzw. unten überstehende Trägerfolien 16 bzw. 20 zu erkennen. In der Draufsicht ist die zickzackartige Faltung der Folien erkennbar mit der nach oben überstehenden Trägerfolie 16. Die Überstände der Trägerfolien 16, 20 bilden die Ableiter der positiven und negativen Elektrode des Elektrodenpacks 10.

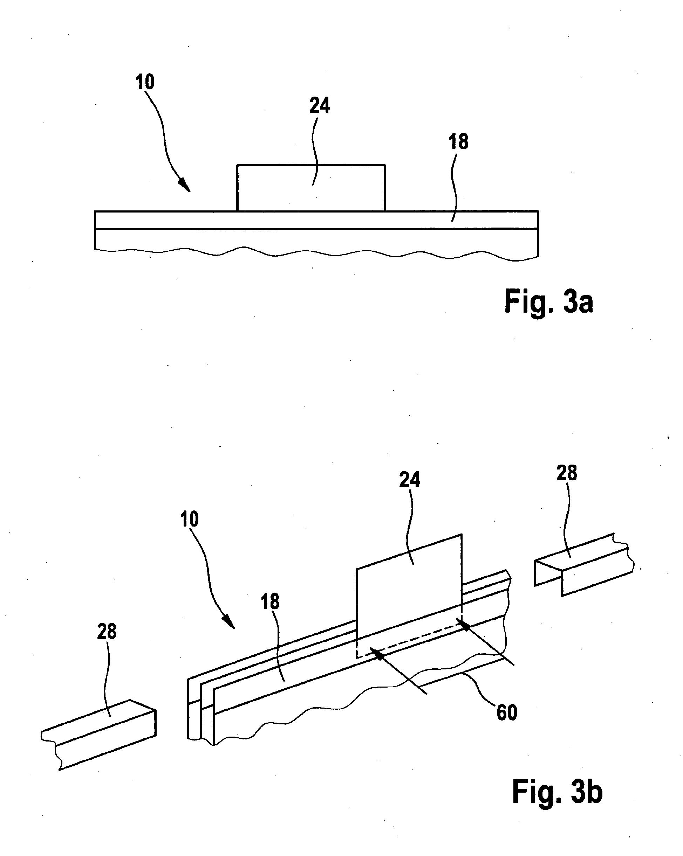

Fig. 3a zeigt einen an die überstehende Trägerfolien 16 des Elektrodenpacks 10 (Fig. 1a) angeschlossenen Stromableiter 24, der an der Breitseite des Elektrodenpacks 10 nach außen ragt. In Fig. 3b ist in einer Schrägansicht eines gefalteten Elektrodenpacks 10 mit Anschlussfahne 24 und Isolierungen 28 für überstehende Trägerfolienbereiche der Trägerfolie 16. Durch die Isolierung 28 ist es möglich, das Elektrodenpack 10 mit einer Metallfolie zu umschließen, die nicht mit einer separaten Isolierschicht kaschiert ist. Ein Bereich 60, an dem der Stromableiter 24 nach außen ragt, ist von der Isolierung 28 freigelassen. Die Isolierung 28 kann als Schiene über die überstehenden Bereiche der Trägerfolie 16 geschoben werden. Die nicht erkennbaren überstehenden Bereiche der Trägerfolie 20 (Fig. 2a) sind in gleicher Weise isoliert.

Es können nicht dargestellte stabilisierende Mittel vorgesehen sein, etwa eine Bandage und/oder eine Kunststoffklammer, mit denen das Elektrodenpack 10 versteift und stabilisiert werden kann, damit die Trägerfolienabstände und damit die Elektrodenabstände sich während der Lebensdauer der Zelle, in welche das Elektrodenpack 10 eingesetzt ist, nicht verändern.

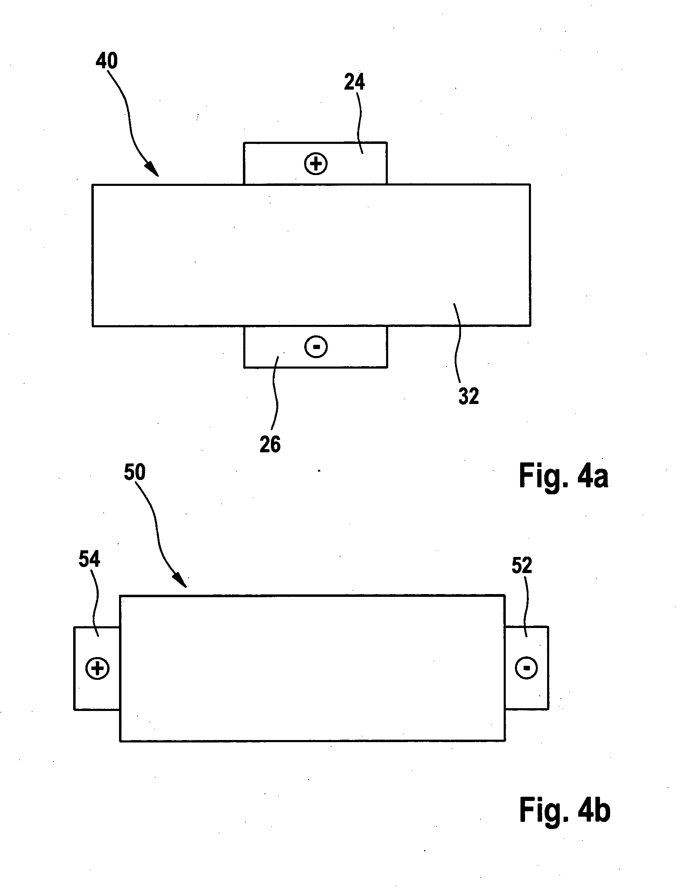

Die Fig. 4a und 4b zeigen einen Vergleich zwischen einer bevorzugten elektrochemischen Zelle 40 und einer bekannten Zelle 50. Die bevorzugte Zelle 40 ist mit einer Außenhaut 32 versehen, die ein nicht erkennbares Elektrodenpack versiegelt. Die Zelle 40 ist rechteckig ausgebildet und länger ausgebildet als hoch. Die Stromableiter 24, 26 ragen an den Breitseiten aus der Zelle 40, senkrecht zur Längserstreckung der Zelle 40, heraus. Im Gegensatz dazu weist die bekannte Zelle 50 zwar einen vergleichbaren Querschnitt auf, jedoch sind deren Stromableiter 52, 54 in konventioneller Art an Schmalseiten der Zelle 50 angeordnet.

## Patentansprüche

1. Elektrodenpack einer elektrochemischen Zelle (40), welche im Wesentlichen flach ausgebildet ist und seitlich abstehende Anschlussfahnen (24, 26) zur elektrischen Kontaktierung aufweist, wobei eine erste mit einer elektrochemisch aktiven Masse (18) beschichtete Trägerfolie (16) und eine zweite mit einer elektrochemisch aktiven Masse (22) beschichtete Trägerfolie (20) durch eine erste Separatorfolie (12) getrennt sind, wobei die erste Trägerfolie (16) auf einer Längsseite entlang einer Längserstreckung (30) der Separatorfolie (12) und die zweite Trägerfolie (20) auf der gegenüberliegenden Längsseite der Separatorfolie (12) übersteht, **dadurch gekennzeichnet, dass** der Elektrodenpacks (10) mit einer Stabilisierung in Form mindestens einer Bandage und / oder mindestens einer Kunststoffklammer versehen ist, welche den Abstand der Trägerfolien (16, 20) im gefalteten Zustand stabilisiert.

2. Elektrodenpack nach Anspruch 1, **dadurch gekennzeichnet, dass** die erste Trägerfolie (16) auf einer zweiten Separatorfolie (14) angeordnet ist.

3. Elektrodenpack nach Anspruch 1 oder 2, **dadurch gekennzeichnet, dass** die Separatorfolie (12, 14) taschenartig ausgebildet ist, wobei wenigstens eine der Trägerfolien (16, 20) in die taschenartig ausgebildete Separatorfoüe (12, 14) eintaucht.

4. Elektrodenpack nach einem der vorhergehenden Ansprüche, **dadurch gekennzeichnet, dass** der Verbund aus Separator- und Trägerfolien (12, 14; 16, 20) entlang seiner Längserstreckung (30) in zickzackartiger Weise gefaltet ist.

5. Elektrochemische Zelle mit einem Elektrodenpack (10), insbesondere nach einem der vorhergehenden Ansprüche, wobei die Zelle im Wesentlichen flach ausgebildet ist und seitlich abstehende Anschlussfahnen (24, 26) zur elektrischen Kontaktierung aufweist, wobei eine erste mit einer elektrochemisch aktiven Masse (18) beschichtete Trägerfolie (16) und eine zweite mit einer elektrochemisch aktiven Masse (22) beschichtete Trägerfolie (20) durch eine erste Separatorfolie (12) getrennt sind, wobei die erste Trägerfolie (16) auf einer Längsseite entlang einer Längserstreckung (30) der Separatorfolie (12) und die zweite Trägerfolie (20) auf der gegenüberliegenden Längsseite der Separatorfolie (12), übersteht und jeweils ein Stromableiter (24, 26) an den überstehenden Trägerfolien (16, 20) angebracht ist, **dadurch gekennzeichnet, dass** der Elektrodenpack (10) mit einer Stabilisierung in Form mindestens einer Bandage und / oder mindestens einer Kunststoffklammer versehen ist, welche den Abstand der Trägerfolien (16, 20) im gefalteten Zustand stabilisiert.

6. Elektrochemische Zelle nach Anspruch 5, **dadurch gekennzeichnet, dass** der Verbund aus Separator- und Trägerfolien (12, 14; 16, 20) entlang der Längserstreckung (30) in zickzackartiger Weise zu dem Elektrodenpack (10) gefaltet ist.

7. Elektrochemische Zelle nach Anspruch 5 oder 6, **dadurch gekennzeichnet, dass** die überstehenden Teile der Trägerfolien (16, 20) außerhalb der Stromableiter (24, 26) mit einem Isolator (28) abgedeckt sind.

8. Elektrochemische Zelle nach einem der Ansprüche 5 bis 7, **dadurch gekennzeichnet, dass** die Stromableiter (24, 26), quer zu der Längserstreckung (30) der Trägerfolien (16, 20) nach außen abstehen.

9. Elektrochemische Zelle nach Anspruch 5 bis 8, **dadurch gekennzeichnet, dass** der Elektrodenpack (10) in seiner Länge größer ausgebildet ist als in seiner Höhe.

10. Elektrochemische Zelle nach einem der Ansprüche 5 bis 9, **dadurch gekennzeichnet, dass** der Elektrodenpack (10) mit einer Außenhaut (32) versiegelt ist.

## Claims

1. Electrode pack of an electrochemical cell (40), which is substantially flat and has laterally protruding connecting lugs (24, 26) for electrical contact-making, wherein a first carrier foil (16), which is coated with an electrochemically active compound (18), and a second carrier foil (20), which is coated with an electrochemically active compound (22), are separated by a first separator foil (12), wherein the first carrier foil (16) protrudes on a longitudinal side along a longitudinal extent (30) of the separator foil (12) and the second carrier foil (20) protrudes on the opposite longitudinal side of the separator foil (12), **characterized in that** the electrode pack (10) is provided with stabilization in the form of at least one banding and/or at least one plastic clip, which stabilizes the spacing between the carrier foils (16, 20) in the folded state.

2. Electrode pack according to Claim 1, **characterized in that** the first carrier foil (16) is arranged on a second separator foil (14).

3. Electrode pack according to Claim 1 or 2, **characterized in that** the separator foil (12, 14) is in the form of a pocket, wherein at least one of the carrier foils (16, 20) enters the pocket-shaped separator foil (12, 14).

4. Electrode pack according to one of the preceding claims, **characterized in that** the composite comprising the separator and carrier foils (12, 14; 16, 20) is folded in zigzag fashion along its longitudinal extent (30).

5. Electrochemical cell comprising an electrode pack (10), in particular according to one of the preceding claims, wherein the cell is substantially flat and has laterally protruding connecting lugs (24, 26) for electrical contact-making, wherein a first carrier foil (16), which is coated with an electrochemically active compound (18), and a second carrier foil (20), which is coated with an electrochemically active compound (22) are separated by a first separator foil (12), wherein the first carrier foil (16) protrudes on a longitudinal side along a longitudinal extent (30) of the separator foil (12) and the second carrier foil (20) protrudes on the opposite longitudinal side of the separator foil (12), and in each case one current collector (24, 26) is fitted on the protruding carrier foils (16, 20), **characterized in that** the electrode pack (10) is provided with stabilisation in the form of at least one banding and/or at least one plastic clip, which stabilizes the spacing between the carrier foils (16, 20) in the folded state.

6. Electrochemical cell according: to Claim 5, **characterized in that** the composite comprising the separator and carrier foils (12, 14; 16, 20) is folder in zigzag fashio-n along the longitudinal extent (30) to form the electrode pack (10).

7. Electro-chemical cell according to Claim 5 or 6, **characterized in that** the protruding parts of the carrier foils (16, 20) are covered by an insulator (28) outside the current collectors (24, 26).

8. Electrochemical cell according to one of Claims 5 to 7, **characterized in that** the current collectors (24, 26) protrude outwards transversely to the longitudinal extent (30) of the carrier foils (16, 20).

9. Electrochemical cell according to Claims 5 to 8, **characterized in that** the electrode pack (10) has a greater length than height.

10. Electrochemical cell according to one of Claims 5 to 9, **characterized in that** the electrode pack (10) is sealed with an outer skin (32).

## Revendications

1. Ensemble d'électrode pour cellule électrochimique (40), de configuration essentiellement plane et présentant des ailettes de raccordement (24, 26) en débord latéral en vue d'assurer la mise en contact électrique,
une première feuille de support (16) revêtue d'une pâte (18) électrochimiquement active et une deuxième feuille de support (20) revêtue d'une pâte (22) électrochimiquement active étant séparées par une première feuille de séparation (12),
la première feuille de support (16) débordant de la feuille de séparation (12) le long de l'extension longitudinale (30) d'un côté longitudinal et la deuxième feuille de support (20) débordant du côté longitudinal opposé de la feuille de séparation (12), **caractérisé en ce que**
l'ensemble d'électrode (10) est doté d'une stabilisation qui présente la forme d'au moins un bandage et/ou d'au moins une pince en matière synthétique qui stabilisent la distance entre les feuilles de support (16, 20) lorsqu'elles sont en position repliée.

2. Ensemble d'électrode selon la revendication 1, **caractérisé en ce que** la première feuille de support (16) est disposée sur une deuxième feuille de séparation (14).

3. Ensemble d'électrode selon les revendications 1 ou 2, **caractérisé en ce que** la feuille de séparation (12, 14) a une configuration en poche, au moins l'une des feuilles de support (16, 20) s'enfonçant dans la feuille de séparation (12, 14) configurée en poche.

4. Ensemble d'électrode selon l'une des revendications précédentes, **caractérisé en ce que** l'ensemble constitué des feuilles de séparation et des feuilles de support (12, 14; 16, 20) est replié en zigzag le long de son extension longitudinale (30).

5. Cellule électrochimique dotée d'un ensemble d'électrode (10) en particulier selon l'une des revendications précédentes,
la cellule étant de configuration essentiellement plane et présentant des ailettes de raccordement (24, 26) en débord latéral en vue d'assurer la mise en contact électrique,
une première feuille de support (16) revêtue d'une pâte (18) électrochimiquement active et une deuxième feuille de support (20) revêtue d'une pâte (22) électrochimiquement active étant séparées par une première feuille de séparation (12),
la première feuille de support (16) débordant de la feuille de séparation (12) le long de l'extension longitudinale (30) d'un côté longitudinal et la deuxième feuille de support (20) débordant du côté longitudinal opposé de la feuille de séparation (12) et
un évacuateur de courant (24, 26) étant placé sur les feuilles de support (16, 20) en débord, **caractérisée en ce que**
l'ensemble d'électrode (10) est doté d'une stabilisation qui présente la forme d'au moins un bandage et/ou d'au moins une pince en matière synthétique qui stabilisent la distance entre les feuilles de support (16, 20) lorsqu'elles sont en position repliée.

6. Cellule électrochimique selon la revendication 5, **caractérisée en ce que** l'ensemble constitué des feuilles de séparation et des feuilles de support (12, 14; 16, 20) est replié en zigzag vers l'ensemble d'électrode (10) le long, de son extension longitudinale (30).

7. Cellule électrochimique selon les revendications 5 ou 6, **caractérisée en ce que** les parties en débord des feuilles de support (16, 20) sont recouvertes d'un isolant (28) à l'extérieur des évacuateurs de courant (24, 26) .

8. Cellule électrochimique selon l'une des revendications 5 à 7, **caractérisée en ce que** les évacuateurs de courant (24, 26) débordent vers l'extérieur transversalement par rapport à l'extension longitudinale (30) des feuilles de support (16, 20).

9. Cellule électrochimique selon l'une des revendications 5 à 8, **caractérisée en ce que** l'ensemble d'électrode (10) a une longueur plus grande que sa hauteur.

10. Cellule électrochimique selon l'une des revendications 5 à 9, **caractérisée en ce que** l'ensemble des électrodes (10) est doté d'une pellicule extérieure (32).
